# EUROPÄISCHE PATENTANMELDUNG

(11) **EP 1 677 519 A2**
(43) Veröffentlichungstag der Anmeldung: **05.07.2006**
(21) Anmeldenummer: 05111350.4
(22) Anmeldetag: 28.11.2005
(51) Int. Cl.: H04N 5/225

(54) **Kamera und Verfahren zur Montage einer Kamera**

(30) Priorität: 04.01.2005 DE 102005000656
(71) Anmelder: ROBERT BOSCH GMBH, 70442 Stuttgart (DE)
(72) Erfinder: Uffenkamp, Volker, 71638, Ludwigsburg (DE); Seger, Ulrich, 71229, Warmbronn (DE); Apel, Uwe, 72666, Neckartailfingen (DE); Schick, Jens, 71083, Herrenberg (DE); Schmack, Andreas, 71229, Leonberg (DE)

(57) **Zusammenfassung**

Es wird eine Kamera (10) für ein Videosystem, mit einem Sensor (12) und einer Optik (14) zur Abbildung eines Objektes auf den Sensor (12), welche in einem Gehäuse (16) aufgenommen sind, offenbart, wobei das Gehäuse (16) eine mit einer Dichtung (18) umgebene Öffnung (20) aufweist, die mit einem Gehäusedeckel (22), welcher mit der Dichtung (18) in Kontakt gebracht wird, dicht gegen Umwelteinflüsse verschliessbar ist. Der Gehäusedeckel (22) ist am Gehäuse (16) im verschlossenen Zustand der Öffnung (20) verbindungselementfrei aufgenommen. Es wird des weiteren ein Verfahren zur Montage einer Kamera (10) beschrieben, in welchem ein Gehäusedeckel (22) an einem Gehäuse (16) zum Verschließen einer Öffnung (20) verbindungselementfrei aufgenommen wird.

## Beschreibung

### Technisches Gebiet

Bei der Fertigung einer Kamera werden ein Sensor, eine Optik zur Abbildung eines Objektes eines Sensors und weitere elektronische Elemente in ein Gehäuse montiert. Dem Gehäuse kommen dabei mehrere Aufgaben zu: Zum einen dient das Gehäuse zum Schutz vor Umwelteinflüssen, wie beispielsweise Staub oder Feuchtigkeit, zum anderen kann es erforderlich sein, dass die elektronischen Elemente der Kamera gegen elektromagnetische Strahlung abgeschirmt werden, um Störungen und Wechselwirkungen mit anderen elektronischen Komponenten oder Geräten in der Umgebung der Kamera zu verringern oder zu verhindern.

### Stand der Technik

In der Regel werden mehrteilige Gehäuse zur Kapselung der Komponenten einer Kamera verwendet. Die einzelnen Teile, insbesondere ein Gehäusedeckel und ein eigentliches Gehäuse, werden miteinander durch Schrauben verbunden.

Aus dem Dokument US 2002/0044202 A1 geht ein Stereokamerasystem hervor, welches zum Einsatz unter Wasser in einem Gehäuse dicht gekapselt ist. Die optischen und elektrischen Komponenten des Stereokamerasystems befinden sich in einem rohrförmigen Behälter, dessen offene Enden mit Deckeln verschließbar sind. In die Öffnungen der Enden umgebenen Ausnehmungen sind o-ringförmige Dichtungen aufgenommen. Die Deckel können mit dem Behälter mittels Schraubverbindungselementen derart befestigt werden, dass das Innere des geschlossenen Behälters wasserdicht abgedichtet ist, indem die Deckel mit den o-ringförmigen Dichtungen in Kontakt gebracht werden. Die auf diese Weise durch die Deckel verschlossenen Öffnungen sind derart groß, dass die optischen und elektrischen Komponenten des Stereokamerasystems durch die Öffnungen einsetzbar oder entnehmbar sind. Der vordere Deckel weist ein abgedichtet eingesetztes Fenster auf, so dass ein sich außerhalb des Behälters befmdendes Objekt auf ein CCD-Feld (Sensor) abgebildet werden kann. Der hintere Deckel weist eine wasserdichte elektrische Durchführung auf.

### Darstellung der Erfindung

Eine erfmdungsgemäße Kamera für ein Videosystem umfasst ein Gehäuse, in welchem mindestens ein Sensor und eine Optik zur Abbildung eines Objektes auf dem Semsor aufgenommen sind. Durch Aufnahme einer zweiten Optik und eines zweiten Sensors im Gehäuse lässt sich zum Beispiel ein Stereokamerasystem erzeugen. Zusätzlich können in dem Gehäuse weitere elektronische Elemente aufgenommen sein, durch die verschiedene Kamerafunktionen, wie das Heranzoomen von Objekten, Ausschnittsvergrößerungen oder andere optische Funktionen, gesteuert werden. Das Gehäuse weist eine Öffnung auf, durch welche der mindestens eine Sensor und die mindestens eine Optik sowie die zusätzlichen elektronischen Elemente in dem Gehäuse montiert werden. Die Öffnung ist mit einem Gehäusedeckel ohne zusätzliche Verbindungselemente oder Zusatzelemente, wie Schrauben, Bolzen, Nieten oder andere dem Fachmann bekannte Verbindungselemente, dicht verschließbar. Ein Schutz des mindestens einen Sensors, der mindestens einen Optik und der zusätzlichen elektronischen Elemente gegen schädigende Umwelteinflüsse wie Staub oder Feuchtigkeit wird dadurch gewährleistet, dass der Gehäusedeckel im verschlossenen Zustand mit einer die Öffnung umgebenden Dichtung in Kontakt gebracht wird oder stoffschlüssig, zum Beispiel durch Löten oder Schweißen, mit dem Gehäuse verbunden wird. Ein geeignetes Schweißverfahren zur Befestigung des Gehäusedeckels auf dem Gehäuse ist zum Beispiel Laserschweißen. Neben der stoffschlüssigen Verbindung kann der Gehäusedeckel auch durch Kleben nicht lösbar mit dem Gehäuse verbunden werden.

Bei vielen Anwendungen wird zudem gefordert, dass die Elektronik der Kamera keine Strahlung emittiert, um Störungen anderer elektronischer Bauteile, die sich in der Umgebung der Kamera befinden können, zu vermeiden. So ist eine Abschirmung der Kamera für elektromagnetische Strahlung insbesondere beim Einsatz der Kamera in Kraftfahrzeugen, in denen eine Vielzahl weiterer elektronischer Bauteile verbaut ist, erforderlich. Die Abschirmung wird dadurch erzielt, dass in verschlossenem Zustand der Öffnung der Gehäusedeckel und das Gehäuse eine Kapselung bilden, durch welche eine elektromagnetische Abschirmung des Inneren der Kamera erreicht wird. Hierzu werden das Gehäuse und der Gehäusedeckel vorzugsweise elektrisch leitfähig miteinander verbunden. Bei einer nicht stoffschlüssigen Verbindung von Gehäuse und Gehäusedeckel wird eine elektrisch leitfähige Verbindung zum Beispiel dadurch erzielt, dass ein Dichtungselement aus einem elektrisch leitfähigen Material oder jedes andere, dem Fachmann bekannte Dichtungselement, das sich zur Abschirmung elektromagnetischer Strahlung eignet und wie es am Markt erhältlich ist, verwendet wird.

Bei einer nicht stoffschlüssigen Verbindung wird der Gehäusedeckel vorzugsweise mit geringer Kraft durch Verformung des Deckels und/oder des Dichtungselementes auf dem Gehäuse aufgenommen. Hierzu ist der Deckel in einer Ausführungsvariante in Form einer Tellerfeder ausgebildet, die gegen ein in der Wandung des Gehäuses aufgenommenes Dichtungselement gepresst wird. In einer weiteren Ausführungsvariante kann der Gehäusedeckel auch mit mindestens einer Schneidkante versehen sein, die in das Dichtungselement einschneidet und so den Gehäusedeckel mit dem Gehäuse dicht gegen Umwelteinflüsse verbindet. Die Schneidkante ist dabei vorzugsweise so ausgebildet, dass sie den Gehäusedeckel umschließt.

In einer weiteren Ausführungsvariante ist der Gehäusedeckel mit einem Innengewinde und das Gehäuse mit einem Außengewinde versehen, um den Gehäusedeckel auf das Gehäuse aufzuschrauben. Es ist auch möglich, den Gehäusedeckel mit einem selbstschneidenden Gewinde zu versehen, so dass beim Aufschrauben des Gehäusedeckels auf das Gehäuse ein Gewinde im Gehäuse eingeschnitten wird, wobei der Gehäusedeckel durch die Schraubverbindung mit dem Gehäuse verbunden wird.

Bei den Ausführungsvarianten, bei denen der Gehäusedeckel mittels einer rotierenden Bewegung auf das Gehäuse aufgesetzt wird, wird die Haltekraft aufgrund des Reibschweißeffektes durch die relative Bewegung des Gehäusedeckels zum Gehäuse verstärkt.

Um zu vermeiden, dass Schadstoffe aus dem Dichtungsmaterial in das Gehäuse ausdampfen können, ist das Dichtungselement vorzugsweise eine ausgasungsfreie Trockendichtung, wie sie dem Fachmann bekannt ist. Dichtungselemente aus herkömmlichen Materialien, wie zum Beispiel Nitril-Butadien-Kautschuk, enthalten in der Regel Weichmacher, die aus der Dichtung ausgasen können. Bei einem gegen Umwelteinflüsse abgedichteten Gehäuse führt dies dazu, dass die aus dem Dichtungselement ausgegasten Stoffe nicht aus dem Gehäuse entweichen können. Spätestens wenn eine Übersättigung der im Gehäuse enthaltenen Luft erreicht ist, setzen sich die aus dem Dichtungselement ausgegasten Stoffe auf der Gehäuseinnenwandung und den im Gehäuse aufgenommenen Bauteilen, wie dem Sensor, der Optik oder den weiteren elektronischen Bauteilen ab. Insbesondere das Absetzen der Stoffe auf dem Sensor und der Optik führt zu einer Abnahme der Qualität der von der Kamera aufgenommenen Bilder.

In einer bevorzugten Ausführungsform nimmt das Dichtungselement eine elektronische Verbindung aus dem Gehäuse nach außen in Form eines Flachbandkabels auf. Über die elektronische Verbindung können von der Kamera erfasste Daten an ein außerhalb des Gehäuses positioniertes elektronisches Bauteil übertragen werden. Ein solches außerhalb des Gehäuses positioniertes elektronisches Bauteil ist zum Beispiel eine Auswerteeinheit, in welcher die von der Kamera erfassten Daten durch bekannte Algorithmen ausgewertet werden.

Der erfindungsgemäße Verschluss stellt damit eine einfache und preisgünstige Alternative zur bisher üblichen Lösung dar. Es wird in vorteilhafter Weise eine dichte oder hermetische Abschirmung der Optik und Elektronik der Kamera erreicht. Die erfindungsgemäße Kamera ist folglich vorteilhaft besonders gut für Anwendungen mit hohen Anforderungen an die Bildqualität bei gleichzeitiger guter Abschirmung emittierter elektromagnetischer Strahlung geeignet. Das erfindungsgemäße Verfahren zur Montage ist einfach, schnell und automationsfähig, so dass Fertigungskosten minimiert werden.

Mit besonderem Vorteil kann die erfindungsgemäße Kamera in einem Videosystem, insbesondere eines Kraftfahrzeugs eingesetzt werden. Videosystemen in Kraftfahrzeugen kommt im zunehmenden Maße besondere Bedeutung für Fahrassistenzsysteme zu, welche in situ der Darstellung und/oder Analyse von realen Szenarien in der Umgebung des Kraftfahrzeugs dienen, so dass dem Fahrer verkehrsrelevante Hinweise gegeben werden können. Mit der erfindungsgemäßen Kamera, die gegen Umwelteinflüsse und zur Abschirmung von Strahlung gekapselt ist, kann während der gesamten Lebensdauer eines Kraftfahrzeugs ein gutes Bild erzeugt werden. Für diese Anwendung weist die erfindungsgemäße Kamera eine besonders gute elektromagnetische Verträglichkeit (EMV) auf, sie stört die Fahrzeugelektronik nicht.

### Zeichnung

Im Folgenden wird die Erfindung anhand einer Zeichnung näher beschrieben.

Es zeigt:
Figur 1 eine Ausführungsform einer erfindungsgemäßen Kamera, deren Gehäuse mit einem Gehäusedeckel verbindungselementfrei verschlossen ist,
Figur 2 Kamera mit einem als Tellerfeder ausgebildeten Gehäusedeckel vor der Montage des Gehäusedeckeldeckels,
Figur 3 Kamera gemäß Figur 2 mit auf dem Gehäuse montiertem Gehäusedeckel,
Figur 4 Kamera mit einem Gehäusedeckel mit Schneidkante vor der Montage des Gehäusedeckels,
Figur 5 Kamera gemäß Figur 4 mit montiertem Gehäusedeckel.

### Ausführungsvarianten

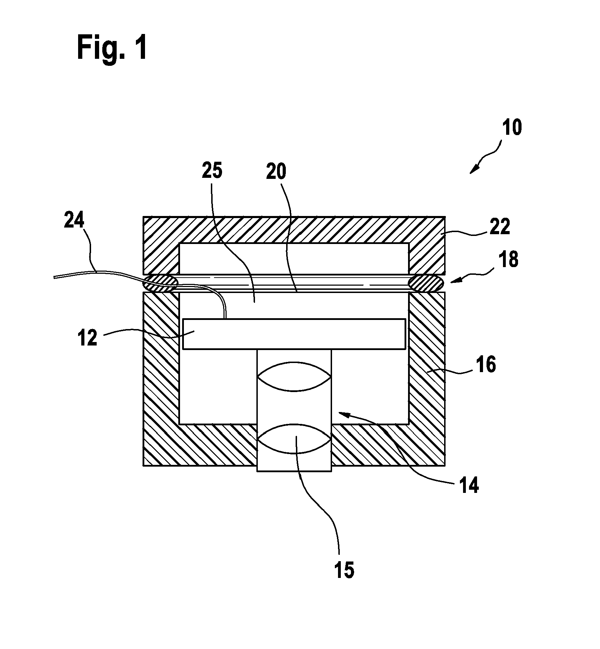

Bei den in den Figuren 1 bis 5 dargestellten Ausführungsformen bezeichnen jeweils gleiche Bezugszeichen gleiche Bauteile.

Figur 1 zeigt eine Ausführungsform einer erfindungsgemäßen Kamera, deren Gehäuse mit einem Gehäusedeckel verbindungselementfrei verschlossen ist.

Eine erfindungsgemäße Kamera 10 umfasst mindestens einen Sensor 12 und mindestens eine Optik 14, die in einem Gehäuse 16 aufgenommen sind. Das Gehäuse 16 kann auch als Gehäuseunterteil oder Gehäusegrundteil bezeichnet werden.

Ein geeigneter Sensor 12 weist zum Beispiel ein CCD-Feld oder ein CMOS-Feld auf. Zusätzlich zu dem CCD-Feld oder CMOS-Feld kann der Sensor auch zum Beispiel eine Photodiode als Helligkeitssensor zum Einstellen der Empfindlichkeit des CCD- oder CMOS-Feldes aufweisen.

Die Optik 14 umfasst mindestens ein Objektiv, mit welchem ein sich außerhalb der Kamera 10 befmdliches, hier nicht dargestelltes Objekt auf dem Sensor 14 abgebildet wird. Hierzu ist im Objektiv mindestens eine Linse 15 aufgenommen.

Das Gehäuse 16 weist eine Öffnung 20 auf, deren Öffnungsquerschnitt so gewählt ist, dass der mindestens eine Sensor 12 und die mindestens eine Optik 14 durch die Öffnung 20 in das Gehäuse 16 eingesetzt werden können. Zusätzlich zu der Optik 14 und dem Sensor 12 können auch noch weitere elektronische Elemente, die hier nicht dargestellt sind, im Gehäuse 16 angeordnet sein. In diesem Fall ist der Querschnitt der Öffnung 20 so zu wählen, dass auch die zusätzlichen elektronischen Elemente in das Gehäuse eingesetzt werden können. Die zusätzlichen elektronischen Elemente sind vorzugsweise so gewählt, dass durch diese verschiedene Kamerafunktionen, wie das Heranzoomen von Objekten, Ausschnittsvergrößerungen oder andere optische Funktionen, gesteuert werden können.

In der hier dargestellten Ausführungsform ist die Öffnung 20 von einem Dichtungselement 18 umgeben. In einer Ausführungsform ist das Dichtungselement 18 o-ringförmig ausgebildet und aus einem elastischen Material gefertigt. Geeignete Materialen, aus denen das Dichtungselement 18 gefertigt sein kann, sind zum Beispiel Nitril-Butadien-Kautschuk oder andere, dem Fachmann bekannte Elastomere.

Um Umwelteinflüsse, wie Staub oder Feuchtigkeit von dem Sensor 12, der Optik 14 und den zusätzlichen elektronischen Elementen fernzuhalten, wird das Gehäuse 16 durch einen Gehäusedeckel 22 verschlossen. Eine gegen Umwelteinflüsse dichte Verbindung wird dadurch erreicht, dass der Gehäusedeckel 22 mit dem Dichtungselement 18 in Kontakt gebracht wird. Durch einen umlaufenden, kontinuierlichen Kontakt des Dichtungselementes mit dem Gehäuse 16 und dem Gehäusedeckel 22 wird ein dichter oder hermetischer Verschluß des Gehäuseinneren 25 erreicht. Der Gehäusedeckel 22 ist zum Beispiel mit dem Gehäuse 16 verschraubt oder kann durch hier nicht dargestellte, dem Fachmann bekannte Klemmen auf dem Gehäuse 16 gehalten werden.

Zur Montage einer erfindungsgemäßen Kamera 10 werden zunächst die Optik 14 und der Sensor 12 in das Gehäuse 16 eingesetzt. Der Gehäusedeckel wird 22 wird am Gehäuse 16 zum dichten Verschließen der Öffnung 20 verbindungselementfrei aufgenommen und in Kontakt mit dem Dichtungselement 18 gebracht. Der Gehäusedeckel 22 wird vorzugsweise nur mit geringem Kraftaufwand auf das Gehäuse 16 gepresst. Im verschlossenen Zustand der Öffnung 20 bilden das Gehäuse 16 und der Gehäusedeckel 22 eine Kapselung, so dass eine elektromagnetische Abschirmung des Inneren der Kamera 10, insbesondere zur Verringerung oder Vermeidung einer Emission elektromagnetischer Strahlung, erreicht wird.

Um eine Ausgasung von Substanzen aus dem Dichtungselement 18 zu vermeiden, ist das Dichtungselement 18 vorzugsweise als Trockendichtung ausgeführt. Bei der Verwendung von Dichtungselementen, die aus herkömmlichen Elastomeren gefertigt werden, können sich ausgegaste Substanzen, wie Weichmacher oder nicht polymerisierte Monomere, auf dem Sensor 16 oder der Optik 14 niederschlagen und so zu einer Verschlechterung der Qualität des von der Kamera 10 erfassten Bildes führen. Trockendichtungen werden vorzugsweise aus Ethylen-Propylen-Terpolymer (EPDM) gefertigt.

Zur Weiterverarbeitung der von der Kamera 10 erfassten Daten müssen diese im allgemeinen an eine Auswerteeinheit übertragen werden, die außerhalb des Gehäuses 16 angeordnet ist. Die Übertragung der Daten kann dabei zum Beispiel über ein Flachbandkabel 24 erfolgen. Das Flachbandkabel 24 ist vorzugsweise von dem Dichtungselement 18 aufgenommen, um eine weitere abzudichtende Durchbruchstelle im Gehäuse 16 oder im Gehäusedeckel 22 zu vermeiden. Neben dem Flachbandkabel 24 ist jedoch auch jedes beliebige andere Kabel zur Übertragung der von der Kamera 10 erfassten Daten einsetzbar. Sofern das Kabel nicht von dem Dichtungselement 18 aufgenommen werden kann, ist hierzu allerdings eine weitere abzudichtende Durchbruchstelle im Gehäuse 16 oder im Gehäusedeckel 22 auszubilden, durch welche das Kabel geführt wird. Neben der Datenübertragung mittels eines Kabels ist es auch möglich, die Daten drahtlos über eine Sende- und Empfangseinheit zu übertragen. Dies ist jedoch nur dann sinnvoll, wenn durch die gesendeten Daten keine anderen elektronischen Bauteile in der Nähe der Kamera 10 gestört werden.

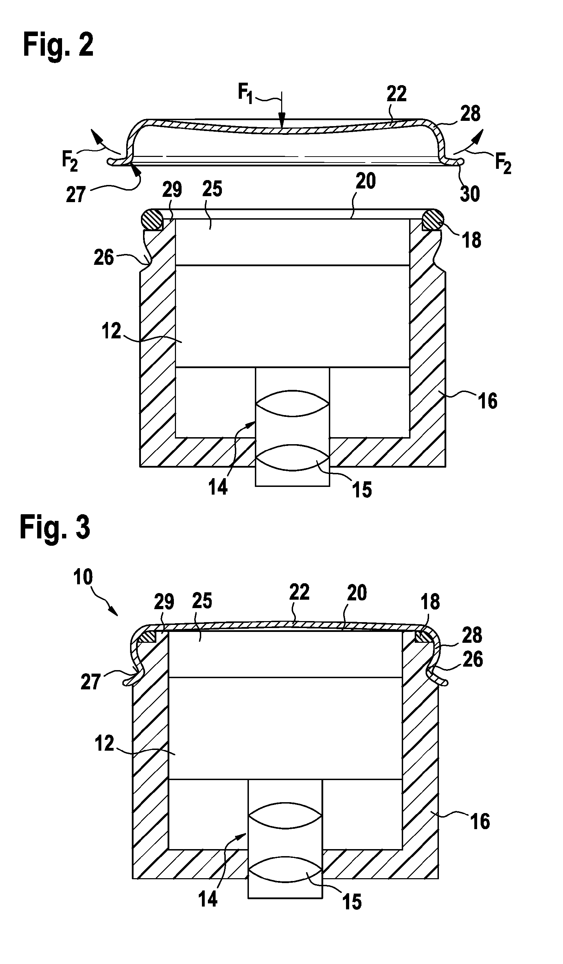

In Figur 2 ist ein Gehäuse für eine Kamera mit einem als Tellerfeder ausgebildeten Deckel vor der Montage des Deckels dargestellt.

Ein als Tellerfeder ausgebildeter Gehäusedeckel 22 umfasst einen Rand 28, der mit einer umlaufenden Einbuchtung 27 versehen ist und in eine Lippe 30 ausläuft. Zur Montage wird auf die Mitte des Gehäusedeckels 22 eine Druckkraft F₁ ausgeübt. Gleichzeitig wird eine Zugkraft F₂ auf die Lippe 30 am Rand 28 des Gehäusedeckels 22 aufgebracht. Hierdurch verformt sich der Gehäusedeckel 22 sowie in Figur 2 dargestellt.

Um einen sicheren Halt des Gehäusedeckels 22 auf dem Gehäuse 16 zu gewährleisten, ist im Gehäuse 16 eine Sicke 26 ausgebildet, in welche die Einbuchtung 27 des Gehäusedeckels 22 eingreift.

Um zu verhindern, dass Staub oder Feuchtigkeit in das Gehäuseinnere 25 eindringen kann, liegt auf dem Gehäuse 16 das Dichtungselement 18 auf. Durch einen radial umlaufenden Ansatz 29 am Gehäuse 16, gegen welches das Dichtungselement 18 anliegt, wird dieses an seiner Position gehalten.

Figur 3 zeigt das in Figur 2 dargestellte Gehäuse mit einem als Tellerfeder ausgebildeten Gehäusedeckel 22 mit montiertem Gehäusedeckel 22.

Beim montierten Gehäusedeckel 22 legt sich die Einbuchtung 27 an die Sicke 26 an. Hierdurch wird eine formschlüssige Verbindung zwischen Gehäusedeckel 22 und Gehäuse 16 erreicht. Aufgrund der Ausbildung des Gehäusedeckels 22 als Tellerfeder übt der Rand 28 mit Einbuchtung 27 einen Druck auf die Sicke 26 aus. Hierdurch wird der Gehäusedeckel 22 an seiner Position gehalten.

Das Dichtungselement 18 bewirkt eine zusätzliche Abdichtung der Kamera 10. Aufgrund des formschlüssigen Anliegens der Einbuchtung 27 in der Sicke 26 wird eine gegen Staub und Feuchtigkeit dichte Verbindung zwischen Gehäusedeckel 22 und Gehäuse 16 erzielt. Aus diesem Grund kann bei der in den Figuren 2 und 3 dargestellten Ausführungsform auf das Dichtungselement 18 verzichtet werden.

Neben der in Figur 2 und Figur 3 dargestellten Position des Dichtungselementes 18 kann das Dichtungselement 18 auch in der Sicke 26 aufgenommen sein. In diesem Fall drückt der Gehäusedeckel 22 mit der Einbuchtung 27 gegen das in der Sicke 26 aufgenommene Dichtungselement 18.

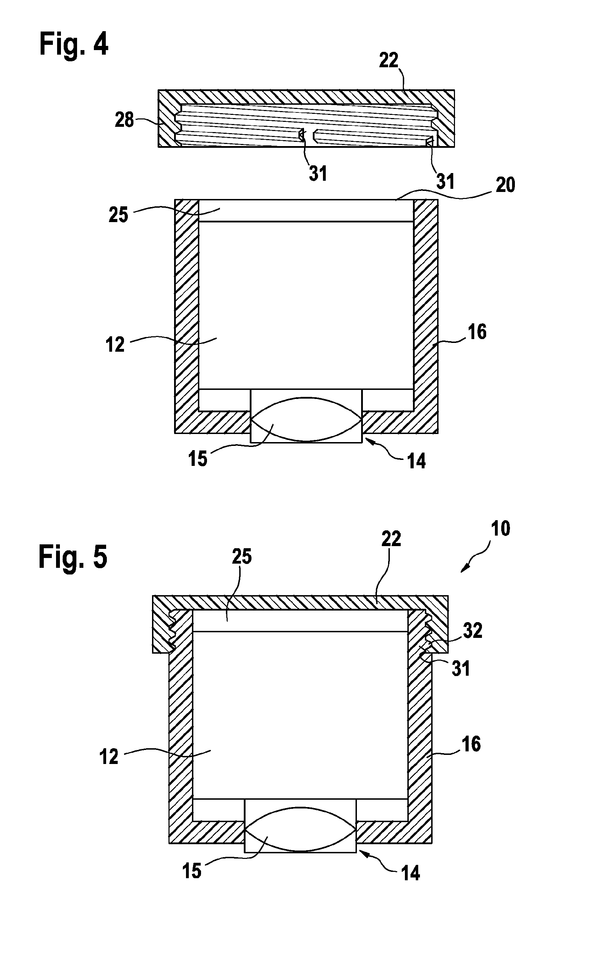

Figur 4 zeigt eine Kamera mit einem Gehäusedeckel 22 mit Schneidkante vor der Montage des Gehäusedeckels 22.

Bei einem Gehäusedeckel 22 mit einer Schneidkante 31 ist die Schneidkante 31 vorzugsweise in Form eines Gewindes auf der Innenseite des Randes 28 im Gehäusedeckel 22 ausgebildet. Zur Montage wird der Gehäusedeckel 22 mit der Schneidkante 31 auf das Gehäuse 16 aufgesetzt und entsprechend einem Schraubverschluss aufgeschraubt. Durch das Aufschrauben des Gehäusedeckels 22 wird in der Wand des Gehäuses 16 eine Gewindenut 32 eingeschnitten.

Durch das Einschneiden des Gewindenut 32, in welcher die Schneidkante 31 des Gehäusedeckels 22 aufgenommen ist, bildet sich eine formschlüssige Verbindung zwischen Gehäuse 16 und Gehäusedeckel 22 aus. Durch die formschlüssige Verbindung von Gehäuse 16 und Gehäusedeckel 22 entsteht eine gegen Umwelteinflüsse dichte Verbindung. Eine zusätzliche Abdichtung kann dadurch erreicht werden, dass ein Dichtungselement 18, welches in den Figuren 4 und 5 nicht dargestellt ist, analog zu der in den Figuren 2 und 3 dargestellten Ausführungsform auf dem Gehäuse positioniert wird. Vorzugsweise ist jedoch, damit das Dichtungselement 18 nicht durch die Schneidkante 31 beschädigt wird, der Ansatz 29 an der Aussenseite des Gehäuses 16 positioniert und nicht an der Innenseite des Gehäuses 16 wie in den Figuren 2 und 3 dargestellt.

Bei der in den Figuren 4 und 5 dargestellten Ausführungsformen ist es nicht möglich, ein Kabel, über welches von der Kamera 10 erfasste Daten übertragen werden, über z.B. ein Flachbandkabel, welches zwischen dem Gehäuse 16 und dem Gehäusedeckel 22 geführt ist, zu übertragen, da beim Aufbringen des Gehäusedeckels 22 dieses beschädigt würde. Aus diesem Grund ist es bei der in den Figuren 4 und 5 dargestellten Ausführungsform erforderlich, bei Übertragung der von der Kamera 10 erfassten Daten über ein Kabel eine zusätzliche Öffnung im Gehäusedeckel 22 oder im Gehäuse 16 auszubilden, durch welche das Kabel zur Datenübertragung geführt wird. Neben der Datenübertragung mit Kabel ist jedoch eine kabellose Datenübertragung denkbar.

## Patentansprüche

1. Kamera (10) für ein Videosystem, mit einem Sensor (12) und einer Optik (14) zur Abbildung eines Objektes auf den Sensor (12), welche in einem Gehäuse (16) aufgenommen sind, wobei das Gehäuse (16) eine Öffnung (20) aufweist, die mit einem Gehäusedeckel (22) verschließbar ist, **dadurch gekennzeichnet, dass** der Gehäusedeckel (22) am Gehäuse (16) im verschlossenen Zustand der Öffnung (20) verbindungselementfrei aufgenommen ist.

2. Kamera (10) für ein Videosystem gemäß Anspruch 1, **dadurch gekennzeichnet, dass** die Öffnung (20) von einem Dichtungselement (18) umgeben ist, und mit dem Gehäusedeckel (22), der mit dem Dichtungselement (18) in Kontakt gebracht wird, dicht gegen Umwelteinflüsse verschließbar ist.

3. Kamera (10) für ein Videosystem gemäß Anspruch 1 oder 2, **dadurch gekennzeichnet, dass** im verschlossenen Zustand der Öffnung (18) das Gehäuse (16) und der Gehäusedeckel (22) eine Kapselung derart bilden, dass eine elektromagnetische Abschirmung des Inneren der Kamera (10) erreicht wird.

4. Kamera (10) für ein Videosystem gemäß Anspruch 2 oder 3, **dadurch gekennzeichnet, dass** die Dichtung (18) eine ausgasungsfreie Trockendichtung ist.

5. Kamera (10) für ein Videosystem gemäß einem der Ansprüche 1 bis 4, **dadurch gekennzeichnet, dass** der Gehäusedeckel (22) als Tellerfeder ausgeführt ist.

6. Kamera (10) für ein Videosystem gemäß einem der Ansprüche 1 bis 5, **dadurch gekennzeichnet, dass** der Gehäusedeckel (22) selbstschneidende Kanten aufweist.

7. Kamera (10) für ein Videosystem gemäß Anspruch 1, **dadurch gekennzeichnet, dass** im verschlossen Zustand der Öffnung (20) das Gehäuse (16) und der Gehäusedeckel (22) nicht lösbar miteinander verbunden sind.

8. Kamera (10) für ein Videosystem gemäß Anspruch 7, **dadurch gekennzeichnet, dass** das Gehäuse (16) und der Gehäusedeckel (22) durch Kleben, Löten oder Laserschweißen dauerhaft miteinander verbunden sind.

9. Kamera (10) für ein Videosystem gemäß Anspruch 2, **dadurch gekennzeichnet, dass** das Dichtungselement (18) eine elektronische Verbindung nach außen in Form eines Flachbandkabels (24) aufnimmt.

10. Kamera (10) für ein Videosystem gemäß einem der Ansprüche 1 bis 9, **dadurch gekennzeichnet, dass** die Öffnung (20) des Gehäuses (16) derart groß ist, dass der Sensor (12) und/oder die Optik (14) durch die Öffnung (20) hindurch in das Gehäuse (16) einsetzbar ist.

11. Verfahren zur Montage einer Kamera (10) für ein Videosystem, wobei ein Sensor (12) und eine Optik (14) zur Abbildung eines Objektes auf den Sensor (12) in einem Gehäuse (16) aufgenommen werden und wobei eine Öffnung (20) des Gehäuses (16) mit einem Gehäusedeckel (22) verschlossen wird, **dadurch gekennzeichnet, dass** der Gehäusedeckel (22) am Gehäuse (16) zum Verschließen der Öffnung (20) verbindungselementfrei aufgenommen wird.

12. Verfahren zur Montage einer Kamera (10) für ein Videosystem gemäß Anspruch 11, **dadurch gekennzeichnet, dass** die Öffnung (20) des Gehäuses (16) von einem Dichtungselement (18) umgeben ist und mit dem Gehäusedeckel (22), der mit dem Dichtungselement (18) in Kontakt gebracht wird, dicht gegen Umwelteinflüsse verschlossen wird.
